# EUROPEAN PATENT SPECIFICATION

(11) **EP 2 584 229 B1**
(45) Date of publication and mention of the grant of the patent: **29.01.2014**
(21) Application number: 12187974.6
(22) Date of filing: 10.10.2012
(51) Int. Cl.: F16J 15/02, F16J 15/32

(54) **O-ring shield system and method**
O-Ringabschirmungssystem und Verfahren
Système et procédé de blindage d'un joint torique

(30) Priority: 20.10.2011 US 201113277882
(43) Date of publication of application: 24.04.2013
(73) Proprietor: Honeywell International Inc., Morristown, NJ 07962-2245 (US)
(72) Inventor: Gov, Ricky, Morristown, NJ New Jersey 07962-2245 (US); Friestad, Jr., Ronald J., Morristown, NJ New Jersey 07962-2245 (US); Zheng, Peter, Morristown, NJ New Jersey 07962-2245 (US)
(74) Representative: Houghton, Mark Phillip

(56) References cited:
- GB-A- 2 214 601
- US-A- 3 567 233
- US-A- 5 169 161
- US-B1- 7 258 371

## Description

### BACKGROUND OF THE INVENTION

The present invention generally relates to refrigerant systems and more partiqularly to an O-ring shield system according to the preamble of claim 1 and as it is disclosed in US 7 258 371B.

A common industry practice is to seal refrigerant system component joints using a radial type O-ring. The O-ring is typically placed in a gland (O-ring groove) that is machined in to the male fitting. The ring is then inserted into a female fitting where the O-ring is compressed between the inner diameter of the female fitting and the bottom of the groove. After the engagement, both halves (male and female fittings) are bolted together. Constant high pressure may damage the O-ring. Additionally, the refrigerant may contaminate the O-rings compromising the structure of the O-ring. Compromised O-rings may permit refrigerant to leak into undesirable portions of the pressurized system causing costly diagnosis and repair.

As can be seen, there is a need for a system that protects O-rings in high pressure refrigerant systems from damage and contamination.

GB 2 214 601A discloses a closure between a pipe and a door.

### SUMMARY OF THE INVENTION

The present invention in its various aspects is as set out in the appended claims.

In one embodiment of the present invention, an O-ring shield system comprises the features of claim 1.

Further details of the invention are outlined in the dependent claims.

These and other features, embodiments and advantages of the present invention will become better understood with reference to the following drawings, description and claims.

### BRIEF DESCRIPTION OF THE DRAWINGS

Figure 1 is a cross-sectional view of an O-ring shield system in accordance with an exemplary embodiment of the present invention; and
Figure 2 is a series of steps of a method in accordance with an exemplary embodiment of the present invention.

### DETAILED DESCRIPTION OF THE INVENTION

The following detailed description is of the best currently contemplated modes of carrying out the invention. The description is not to e taken in a limiting sense, but is made merely for the purpose of illustrating the general principles of the invention, since the scope of the invention is best defined by the appended claims.

Various inventive features are described below that can each be used independently of one another or in combination with other features. However, any single inventive feature may not address any of the problems discussed above or may only address one of the problems discussed above. Further, one or more of the problems discussed above may not be fully addressed by any of the features described below.

The present invention generally provides a layer of protection for gaskets. In one aspect, gaskets, for example, O-rings in high pressure aerospace-based refrigerant systems may be protected from rapid pressure changes. Exemplary aerospace-based refrigerant systems that may benefit from aspects of the following disclosure may include those using liquid and oil mixed refrigerants. In high pressure refrigerant systems O-rings may be permeable, thus inclined to absorbing refrigerant. Contamination of an O-ring with refrigerant may cause leaks and in some cases, may result in explosive decompression of the O-ring during rapid changes in pressure in the system.

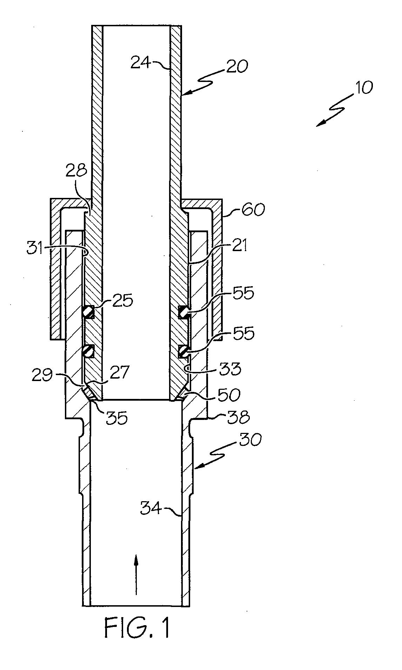

Referring to Figure 1, an exemplary embodiment of an O-ring shield system 10 is shown. The O-ring shield system may include a pipe 20 and pipe 30 coupled together by a fastener 60. The O-ring shield system 10 may also include one or more O-rings 55 and a shield ring 50. In the O-ring shield system 10, the flow of refrigerant is flowing through pipe interior walls 34 and 24 from pipe 30 to pipe 20. Thus, in one exemplary embodiment, the O-ring shield 50 is positioned upstream of the O-rings 55.

In an exemplary embodiment of the O-ring shield system 10, the pipe 20 may include a male boss 28 and the pipe 30 may include a female boss 38. The male boss 28 may include a threaded exterior surface 21 configured for within a threaded interior surface 31 of female boss 38. The male boss 28 may include circumferential grooves or glands 25 adapted to receive the O-rings 55. The male boss 28 may also include a beveled end 27. The female boss 38 may include a beveled seat surface 35 configured to complement the beveled end 27 when the male boss 28 is coupled to the female boss 38. When coupled, the exterior surface 21 and interior surface 31 may define an inclined-plane passage 33 between the beveled end 27 and the O-rings 55. The beveled end 27 and the beveled seat 35 may be spaced apart. The O-ring shield ring 50 may be positioned between the beveled end 27 and the beveled seat 35. A gap 29 may be defined by the spacing between the O-ring shield ring 50 and the beveled end 27. The gap 29 may be in communication with the passage 33.

The O-ring shield ring 50 may be, for example, a washer selected from compressible material that may deform under predetermined pressure. For example, the O-ring shield ring 50 may be made of material that will decompress under pressures of approximately 42 kg per per square cm without breaking. One exemplary material used may be copper. The O-ring shield 50 may also be configured to withstand pressure changes of approximately 100 psi/sec. In one exemplary embodiment, coupling the male boss 28 into the female boss 38 may provide torque onto the O-ring shield ring 50 engaging the O-ring shield ring 50 onto the beveled end 27 and the beveled seat 35. During rapid pressure changes for example, pressure drops, the O-ring shield ring 50 may deform and at least partially fill the gap 29 while maintaining a barrier between the passage 33 and pipe interior wall 34.

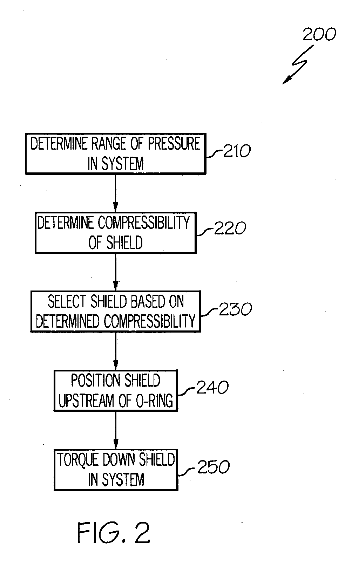

Referring now to Figure 2, a method 200 is shown in accordance with an exemplary embodiment of the present invention. A system employing aspects in accordance with the disclosure may be analyzed for a range of typical operating pressure. The upper and lower threshold limits of operating pressure may be determined in step 210. An exemplary operating pressure in the system may be in the range of approximately 8 - 350 pounds per square inch absolute (psia). In step 220, compressibility of a material suitable in the system may be determined based on the threshold operating pressure limits determined in step 210. In step 230 a shield ring may be selected that includes the material with suitable compressibility determined in step 220. The selected shield may then be positioned in a boss end of a pipe of the system so that the shield ring is within a fluid flow, upstream of an O-ring (step 240). The boss end of the pipe may be coupled to an adjoining pipe end and torqued into place so that a torque pressure is applied to the shield ring (Step 250).

## Claims

1. An O-ring shield system (10), comprising:
a first pipe (30) including a female boss (38) on an end of the first pipe (30), the female boss (38) including a beveled seat (35);
a second pipe (20) including,
a male boss (28) including a beveled end (27) configured complementary to the beveled seat (35), wherein the beveled end (27) is disposed spaced from the beveled seat (35) when the first pipe (30) is coupled to the second pipe (20), and
one or more circumferential grooves (25) positioned on an exterior surface (21) of the second pipe (20);
one or more O-rings (55) disposed in the one or more circumferential grooves (25); and **characterized by**
a shield ring (50) disposed between the beveled end (27) and the beveled seat (35), wherein the shield ring (50) and the beveled end (27) define a gap (29) between each other and the shield ring (50) is configured to deform and at least partially fill the gap (29) under a predetermined pressure, the shield ring (50) positioned upstream a flow of refrigerant of the one or more O-rings (55).

2. The O-ring shield system (10) of claim 1 wherein the circumferential grooves (25) are disposed on the exterior surface (21) of the male boss (28).

3. The O-ring shield system (10) of claim 1 or 2 wherein the O-rings (55) are disposed to be torqued into position within the female boss (38).

4. The O-ring shield system (10) of any one of the preceding claims wherein the shield ring (50) is selected from a metal rated compressible under approximately 42 kg per square cm of pressure.

5. The O-ring shield system (10) of any one of the preceding claims wherein the shield ring (50) is copper.

## Patentansprüche

1. O-Ring-Abschirmungssystem (10), umfassend:
ein erstes Rohr (30), das einen Aufnahmeansatz (38) an einem Ende des ersten Rohrs (30) enthält, wobei der Aufnahmeansatz (38) einen abgeschrägten Sitz (35) enthält;
ein zweites Rohr (20), das
**einen Steckansatz (28) mit einem** abgeschrägten Ende (27), das komplementär zu dem abgeschrägten Sitz (35) konfiguriert ist, wobei das abgeschrägte Ende (27) in einem Abstand von dem abgeschrägten Sitz (35) angeordnet ist, wenn das erste Rohr (30) mit dem zweiten Rohr (20) gekoppelt ist, und
eine oder mehrere Umfangsnuten (25), die an einer Außenfläche (21) des zweiten Rohrs (20) positioniert sind, enthält;
einen oder mehrere O-Ringe (55), der/die in der einen oder in den mehreren Umfangsnuten (25) angeordnet ist/sind; und **gekennzeichnet durch**
einen Abschirmungsring (50), der zwischen dem abgeschrägten Ende (27) und dem abgeschrägten Sitz (35) angeordnet ist, wobei der Abschirmungsring (50) und das abgeschrägte Ende (27) zwischen sich einen Spalt (29) definieren und der Abschirmungsring (50) dazu konfiguriert ist, sich unter einem vorbestimmten Druck zu verformen und den Spalt (29) zumindest teilweise zu füllen, wobei der Abschirmungsring (50) stromaufwärts eines Kältemittelstroms des einen oder der mehreren O-Ringe (55) positioniert ist.

2. O-Ring-Abschirmungssystem (10) nach Anspruch 1, wobei die Umfangsnuten (25) auf der Außenfläche (21) des Steckansatzes (28) ausgebildet sind.

3. O-Ring-Abschirmungssystem (10) nach Anspruch 1 oder 2, wobei die O-Ringe (55) dazu angeordnet sind, in Position in dem Aufnahmeansatz (38) festgezogen zu werden.

4. O-Ring-Abschirmungssystem (10) nach einem der vorhergehenden Ansprüche, wobei der Abschirmungsring (50) aus einem unter ca. 42 kg pro cm² Druck komprimierbar eingestuften Metall ausgewählt wird.

5. O-Ring-Abschirmungssystem (10) nach einem der vorhergehenden Ansprüche, wobei der Abschirmungsring (50) aus Kupfer besteht.

## Revendications

1. Système de blindage (10) d'un joint torique, comprenant :
un premier tube (30) comportant un bossage femelle (38) à une extrémité du premier tube (30), le bossage femelle (38) comportant un siège biseauté (35) ;
un deuxième tube (20) comportant
un bossage mâle (28) comportant une extrémité biseautée (27) configurée de manière complémentaire au siège biseauté (35), l'extrémité biseautée (27) étant disposée de manière espacée par rapport au siège biseauté (35) lorsque le premier tube (30) est accouplé au deuxième tube (20), et
une ou plusieurs gorges circonférentielles (25) positionnées sur une surface extérieure (21) du deuxième tube (20) ;
un ou plusieurs joints toriques (55) disposés dans la ou les gorges circonférentielles (25) ; et **caractérisé par**
un anneau de blindage (50) disposé entre l'extrémité biseautée (27) et le siège biseauté (35), l'anneau de blindage (50) et l'extrémité biseautée (27) définissant un espace (29) entre eux et l'anneau de blindage (50) étant configuré pour se déformer et remplir au moins en partie l'espace (29) sous l'effet d'une pression prédéterminée, l'anneau de blindage (50) étant positionné en amont d'un flux de réfrigérant de l'un des joints toriques (55).

2. Système de blindage (10) d'un joint torique selon la revendication 1, dans lequel les gorges circonférentielles (25) sont disposées sur la surface extérieure (21) du bossage mâle (28).

3. Système de blindage (10) d'un joint torique selon la revendication 1 ou 2, dans lequel les joints toriques (55) sont disposés de manière à être tordus en position à l'intérieur du bossage femelle (38).

4. Système de blindage (10) d'un joint torique selon l'une quelconque des revendications précédentes, dans lequel l'anneau de blindage (50) est choisi parmi un métal de qualité compressible à une pression d'environ 42 kg par centimètre carré.

5. Système de blindage (10) d'un joint torique selon l'une quelconque des revendications précédentes, dans lequel l'anneau de blindage (50) est en cuivre.
